(19) Europäisches Patentamt
European Patent Office
Office européen des brevets

(11) **EP 2 489 134 B1**

(12) **FASCICULE DE BREVET EUROPEEN**

(45) Date de publication et mention
de la délivrance du brevet:
**30.01.2019 Bulletin 2019/05**

(21) Numéro de dépôt: **10766041.7**

(22) Date de dépôt: **14.10.2010**

(51) Int Cl.:
**H04L 12/413** $^{(2006.01)}$

(86) Numéro de dépôt international:
**PCT/EP2010/065399**

(87) Numéro de publication internationale:
**WO 2011/045367 (21.04.2011 Gazette 2011/16)**

(54) **PROCÉDÉ ET DISPOSITIF DE DÉTECTION DE LA PRÉSENCE D'UN SIGNAL MODULÉ SUR UN MÉDIUM.**

VERFAHREN UND VORRICHTUNG ZUR ERKENNUNG DES VORHANDENSEINS EINES MODULIERTEN SIGNALS AUF EINEM MEDIUM

METHOD AND DEVICE FOR DETECTING THE PRESENCE OF A MODULATED SIGNAL ON A MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2009 FR 0957260**

(43) Date de publication de la demande:
**22.08.2012 Bulletin 2012/34**

(73) Titulaire: **SAGEMCOM BROADBAND SAS**
**92500 Rueil Malmaison (FR)**

(72) Inventeur: **DANGY-CAYE, Nicolas**
**F-92500 Rueil Malmaison (FR)**

(74) Mandataire: **Cabinet Le Guen Maillet**
**3, impasse de la Vigie**
**CS 71840**
**35418 Saint-Malo Cedex (FR)**

(56) Documents cités:
**WO-A1-92/21193      US-A1- 2002 181 613**
**US-A1- 2009 096 592**

## Description

La présente invention concerne un procédé et un dispositif de détection de la présence d'un signal modulé sur un médium. Elle concerne également un procédé de mise en veille et de réveil d'un adaptateur courant porteur mettant en oeuvre le procédé de détection. Enfin, elle concerne un tel adaptateur courant porteur.

Il est connu d'utiliser deux, voire plus, adaptateurs courant porteur pour que deux, voire plus, terminaux échangent entre eux des signaux modulés porteurs de données utiles de type multimédia via un réseau électrique domestique.

Pour cela, une norme ou technologie courant porteur qui utilise une structure de modulation de type OFDM est mise en oeuvre par chaque adaptateur courant porteur telle que par exemple la technologie Homeplug (1.0 Turbo, AV), h.pna (G. 9954) ou plus généralement g.hn (G.9960 en cours de finalisation).

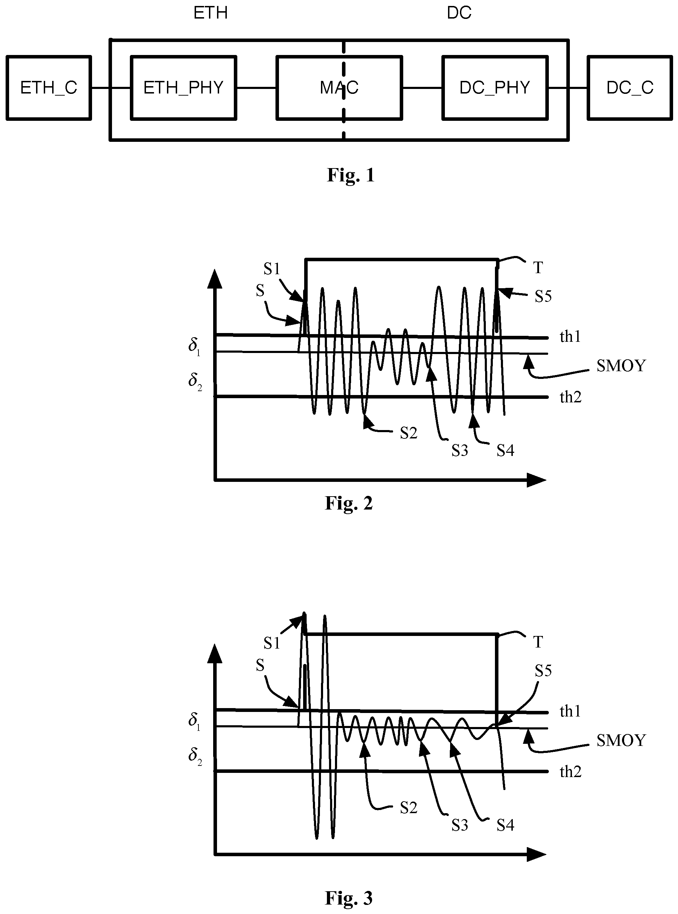

La Fig. 1 représente schématiquement la structure interne d'un adaptateur courant porteur.

Un adaptateur courant porteur comporte une interface (réseau) DC appelée par la suite interface courant porteur, une autre interface (réseau) ETH, habituellement de type Ethernet, un connecteur ETH_C prévu pour relier l'adaptateur courant porteur au réseau Ethernet et un autre connecteur DC_C prévu pour relier l'adaptateur courant porteur au réseau électrique. Ces connecteurs ETH_C et DC_C peuvent comporter, éventuellement, des moyens pour transformer les signaux qu'ils reçoivent en d'autres signaux qu'ils émettent et ce de manière bidirectionnelle.

L'interface ETH regroupe un ensemble de fonctionnalités qui sont implémentées au niveau de deux couches : une couche physique ETH_PHY et une couche MAC (Médium Access Control). Ces fonctionnalités de la couche physique et MAC sont mises en oeuvre par des moyens matériels qui se présentent habituellement pour la couche physique sous la forme d'un ensemble de composants électroniques et pour la couche MAC sous la forme d'un processeur.

L'interface DC regroupe également un ensemble de fonctionnalités qui sont également implémentées au niveau de deux couches : une couche physique DC_PHY et une couche MAC (Médium Access Control).

Les interfaces DC et ETH communiquent entre elles au niveau de leur couche MAC telle qu'illustrée sur la Fig. 1 par le trait vertical pointillé.

L'alimentation électrique des moyens matériels des couches physiques et des couches MAC d'un adaptateur courant porteur induit une consommation électrique qui, bien que indispensable lorsque ces interfaces sont susceptibles d'échanger des signaux modulés porteurs de données utiles, peut être réduite lorsque l'adaptateur courant porteur n'est pas sous tension ou que le lien qui est établi entre l'interface et une autre interface distante du même type n'est pas utilisé.

Il est connu le document WO 92/21193 A1 qui divulgue l'utilisation d'un niveau de seuil de détection de porteuse modifié dynamiquement pour se situer généralement au-dessus du bruit de fond, afin de détecter un signal de porteuse modulé par des données binaires.

A cet effet, la plupart des adaptateurs courant porteur actuels mettent en oeuvre au niveau de la couche physique de leur interface Ethernet une fonctionnalité dite de détection d'énergie (Energy Detect en anglais). Cette fonctionnalité permet de réduire la consommation électrique de l'interface Ethernet en la faisant basculer d'un mode actif, c'est-à-dire d'un mode dans lequel les moyens de l'interface sont alimentés électriquement, vers un mode basse consommation dans lequel ces moyens ne sont pas alimentés électriquement. Des moyens peu consommateurs en énergie électrique sont alors mis en oeuvre pour détecter la présence d'un signal sur la couche physique de l'interface Ethernet, c'est-à-dire pour détecter l'activité sur la couche physique de cette interface. Les demandes de brevets US6993667 et US7278039 décrivent la mise en oeuvre d'une telle fonctionnalité.

Le basculement du mode actif au mode basse consommation d'un adaptateur courant porteur par détection de l'activité sur la couche physique de son interface Ethernet ne permet pas de réduire de manière significative la consommation de cet adaptateur. En effet, pour optimiser le bilan énergétique d'un adaptateur courant porteur, il est nécessaire de détecter également l'activité sur la couche physique de son interface DC. Ainsi, un adaptateur courant porteur pourvu d'un dispositif de détection d'activité sur la couche physique de son interface Ethernet et d'un autre dispositif de détection d'activité sur la couche physique de son interface DC peut mettre en oeuvre une stratégie optimale de mise en veille, respectivement de réveil, de ces interfaces par coupure, respectivement rétablissement, de leur alimentation électrique. Par exemple, si une inactivité est observée sur la couche physique de l'une de ses deux interfaces, cette interface peut basculer dans le mode basse consommation et si une inactivité sur la couche physique de l'autre interface est également observée, cette autre interface peut également basculer dans le mode basse consommation. De plus, dès qu'une activité est observée sur la couche physique de l'une des deux interfaces, cette interface bascule dans le mode actif. Il peut également être envisagé que la détection de l'inactivité, respectivement, l'activité sur la couche physique de l'une des deux interfaces provoque également le basculement des deux interfaces vers le mode basse consommation, respectivement actif.

Pourvoir un adaptateur courant porteur d'un dispositif de détection de l'activité sur la couche physique de son interface DC permet donc d'optimiser le bilan énergétique de cet adaptateur.

Il est connu de tels dispositifs qui détectent si un signal modulé est reçu par l'adaptateur sur la couche physique de son interface DC. Ces dispositifs ne sont toutefois pas optimaux en terme énergétique car ils requièrent l'usage de certains modules de la structure de modulation OFDM qui sont coûteux en termes énergétiques. Parmi ces moyens, on peut citer le bloc de transformée de Fourier (FFT), le brouilleur (scrambler), le codeur ou encore l'interface AFE (Analog Front End) qui interface le medium du réseau électrique avec la structure de modulation. On pourra se référer à l'article intitulé « HomePlug AV White Paper, version HPAVWP-050818 de 2005, pour avoir un exemple de structure de modulation OFDM dans le cas de la norme HomePlug.

Le problème résolu par la présente invention est de fournir un dispositif de détection de l'activité sur la couche physique de l'interface DC d'un adaptateur courant porteur qui soit très peu consommateur d'énergie.

A cet effet, la présente invention concerne un procédé de détection de la présence d'un signal modulé sur un médium, caractérisé en ce qu'il prélève, pendant une période de temps prédéterminée, au moins un échantillon d'un signal présent sur ce médium et détermine qu'un signal modulé est présent sur le médium si le nombre d'échantillons, dont les valeurs s'écartent de la valeur moyenne de ce signal d'une valeur prédéterminée est supérieur à un seuil prédéterminé, et de déterminer qu'aucun signal modulé n'est présent sur le médium dans le cas contraire.

Ce procédé permet de distinguer un bruit impulsionnel présent sur le médium d'un signal modulé. En effet, un bruit impulsionnel se caractérise, le plus souvent, par une énergie importante répartie sur une durée faible. En choisissant une période de temps supérieure à la durée d'un bruit impulsionnel et en déterminant le seuil de manière adéquate, un, voire quelques échantillons sont comptabilisés pendant la période de temps lorsque ce bruit est présent sur le médium, mais le nombre de ces échantillons est inférieur au seuil prédéterminé alors qu'il est supérieur à ce seuil lorsqu'un signal modulé est présent sur le médium.

La valeur d'un échantillon prélevé est considérée comme s'écartant de la valeur moyenne du signal lorsque cette valeur est soit supérieure à un premier seuil, soit inférieure à un second seuil, le premier seuil est défini en ajoutant une valeur prédéterminée à la valeur moyenne du signal reçu tandis que le second seuil est défini en retranchant cette valeur prédéterminée à la valeur moyenne.

Selon un mode de réalisation, des échantillons sont prélevés et la période de temps prédéterminée débute dès que la valeur d'un échantillon prélevé s'écarte de la valeur moyenne de ce signal de la valeur prédéterminée.

Selon un mode de réalisation, la moyenne du signal est ré-ajustée tant qu'une première valeur d'échantillon prélevé ne s'écarte pas de la valeur moyenne de ce signal de la valeur prédéterminée.

Selon l'un de ses aspects matériels, la présente invention concerne un dispositif de détection de la présence d'un signal modulé sur un médium. Le dispositif est caractérisé en ce qu'il comporte des moyens pour prélever au moins un échantillon d'un signal présent sur ce médium, un moyen pour déterminer si la valeur de chaque échantillon prélevé s'écarte de la valeur moyenne de ce signal d'une valeur prédéterminée, et des moyens pour mettre en oeuvre l'un des procédés ci-dessus.

Le prélèvement d'échantillon d'un signal et la comparaison de la valeur de cet échantillon avec une valeur prédéterminée sont des fonctions qui sont mises en oeuvre par des moyens peu consommateurs en énergie.

Baser la détection sur de tels moyens permet donc que l'ensemble des moyens de la structure de modulation ne soit plus alimenté électriquement pendant que l'adaptateur fonctionne en mode basse consommation c'est-à-dire durant chaque période de détection de l'activité sur la couche physique de son interface courant porteur.

Ainsi, le dispositif de détection selon la présente invention permet, lorsqu'il est utilisé pour piloter la mise en veille et le réveil des interfaces d'un adaptateur courant porteur, d'optimiser le bilan énergétique de cet adaptateur.

La présente invention concerne également un procédé de mise en veille et de réveil de l'interface courant porteur d'un adaptateur courant porteur. Le procédé est caractérisé en ce que l'interface courant porteur est réveillée électriquement lorsque la présence d'un signal modulé reçu sur la couche physique de cette interface est détectée par un procédé de détection ci-dessus, et l'interface courant porteur est mise en veille si la présence d'un tel signal n'est pas détectée.

Selon un autre de ses aspects matériels, la présente invention concerne un adaptateur courant porteur qui comporte un dispositif ci-dessus.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1 représente schématiquement la structure interne d'un adaptateur courant porteur,
La Fig. 2 représente un chronogramme illustrant un procédé de détection de la présence d'un signal modulé sur un médium,
La Fig. 3 représente un chronogramme illustrant un procédé de détection de la présence d'un signal modulé sur un médium lorsqu'un bruit impulsionnel est présent sur le médium,
La Fig. 4 représente schématiquement un mode de réalisation d'un dispositif de détection de la présence d'un signal modulé sur un médium,
La Fig. 5 représente schématiquement un autre mode de réalisation d'un dispositif de détection de la présence d'un signal modulé sur un médium,
La Fig. 6 représente schématiquement un mode de réalisation pour mettre en oeuvre un dispositif de détection de la présence d'un signal modulé dans un adaptateur courant porteur,

La Fig. 7 représente schématiquement un autre mode de réalisation pour mettre en oeuvre un dispositif de détection de la présence d'un signal modulé dans un adaptateur courant porteur, et

La Fig. 8 représente un diagramme des étapes d'un procédé de mise en veille et de réveil de l'interface courant porteur d'un adaptateur.

Considérons qu'un signal SM modulé par exemple par une structure de type OFDM pour transporter des données soit présent sur un médium.

La valeur moyenne SMOY de ce signal SM est calculée et deux seuils th1 et th2 sont déterminés. Le seuil th1 est défini en ajoutant une valeur prédéterminée $\delta_1$ à la valeur moyenne SMOY et le seuil th2 est défini en retranchant la valeur $\delta_2$ de la valeur moyenne SMOY. Les valeurs $\delta_1$ et $\delta_2$ peuvent bien évidemment être égales à une même valeur $\delta$.

Le procédé consiste à prélever, pendant une période de temps prédéterminée T, au moins un échantillon Si du signal présent sur ce médium, de déterminer qu'un signal modulé SM est présent sur le médium si le nombre d'échantillons Si, dont les valeurs V(Si) s'écartent de la valeur moyenne SMOY de ce signal d'une valeur prédéterminée, c'est-à-dire soit de la valeur $\delta_1$, soit de la valeur $\delta_2$ selon l'exemple de la Fig. 2, soit de la valeur $\delta$ lorsque les valeurs $\delta_1$ et $\delta_2$ sont égales à cette même valeur $\delta$, est supérieur à un seuil prédéterminé Th, et de déterminer qu'aucun signal modulé n'est présent sur le médium dans le cas contraire.

Selon un mode de réalisation préféré, des échantillons sont prélevés et la période de temps prédéterminée T débute dès que la valeur d'un échantillon prélevé Si s'écarte de la valeur moyenne de ce signal de la valeur prédéterminée.

Selon l'exemple de la Fig. 2, dans lequel cinq échantillons sont prélevés par période de temps T et le seuil Th égal à 3, les échantillons S1, S2, S4 et S5 ont leur valeurs qui s'écartent de la valeur moyenne SMOY de la valeur prédéterminée : V(S1) > th1, V(S2) < th2, V(S4) < th2 et V(S5) > th1. Le nombre d'échantillons ainsi comptabilisés, égal à 4, est supérieur au seuil Th ici égal à 3 et le signal présent sur le médium est alors considéré comme étant un signal modulé SM.

Considérons maintenant l'exemple de la Fig. 3 dans le cas où cinq échantillons sont prélevés et où le seuil Th est égal à 3. Seule la valeur de l'échantillon S1 s'écarte de la valeur moyenne SMOY de la valeur prédéterminée : V(S1) > th1. Le nombre d'échantillons ainsi comptabilisés est donc inférieur au seuil Th et le signal présent sur le médium est alors considéré comme n'étant pas un signal modulé SM mais comme un bruit impulsionnel.

La période de temps T, les intervalles de temps séparant le prélèvement de deux échantillons successifs pendant cette période de temps T, le nombre d'échantillons prélevés pendant cette période de temps T et le seuil Th sont des paramètres du procédé qui sont réglés selon des caractéristiques du signal modulé SM qui est susceptible d'être présent sur le médium.

Dans le cas où le dispositif de détection est utilisé pour détecter un signal OFDM sur la couche physique de l'interface DC d'un adaptateur courant porteur, la période de temps T est au moins égale à la longueur de la balise (beacon en anglais) utilisée par les normes ou technologies courant porteur telles que la norme Home-Plug AV. Typiquement, T=430 $\mu s$. Ce réglage de la période de temps T est avantageux dans ce cas car il permet au procédé de pouvoir être réactif lorsqu'un signal OFDM est présent sur la couche physique de l'interface courant porteur du fait que la balise est émise préalablement à tout signal OFDM porteur de données. Typiquement, dans ce cas, une centaine d'échantillons est prélevée pendant la période de temps T et les valeurs prédéterminées $\delta_1$ et $\delta_2$ sont toutes les deux égales à 0,1v, la valeur moyenne SMOY étant alors approximativement égale à 1,7V.

Selon une variante de ce mode de réalisation préféré, la moyenne SMOY est ré-ajustée tant qu'une première valeur d'échantillon prélevé V(Sk) ne s'écarte pas de la valeur moyenne SMOY d'une valeur prédéterminée, c'est-à-dire soit de la valeur $\delta_1$, soit de la valeur $\delta_2$ selon l'exemple de la Fig. 2, soit de la valeur $\delta$ lorsque les valeurs $\delta_1$ et $\delta_2$ sont égales à cette même valeur $\delta$.

Dans ce cas, une nouvelle valeur moyenne SMOY' est alors calculée par

$$SMOY' = \frac{1}{N+1}\left(N \times SMOY + V(S_k)\right)$$ dans laquelle N est le nombre d'échantillons utilisés jusque-là pour calculer la valeur moyenne SMOY. Cette variante est avantageuse car elle pallie les fluctuations du signal SM et des caractéristiques des composants utilisés pour mettre en oeuvre le procédé de détection (tolérances des caractéristiques intrinsèques des composants électroniques, fluctuations dues aux changements de température de ces composants,...).

Selon l'un de ses aspects matériels, la présente invention concerne un dispositif D de détection de la présence d'un signal modulé sur un médium.

Le dispositif D comporte des moyens MPREL pour prélever au moins un échantillon Si d'un signal Rx présent sur ce médium, un moyen COMP pour déterminer si la valeur de chaque échantillon prélevé s'écarte de la valeur moyenne SMOY de ce signal d'une valeur prédéterminée ($\delta_1, \delta_2, \delta$), et des moyens DEC pour mettre en oeuvre l'un des procédés décrits en relation avec les Fig. 2 et 3.

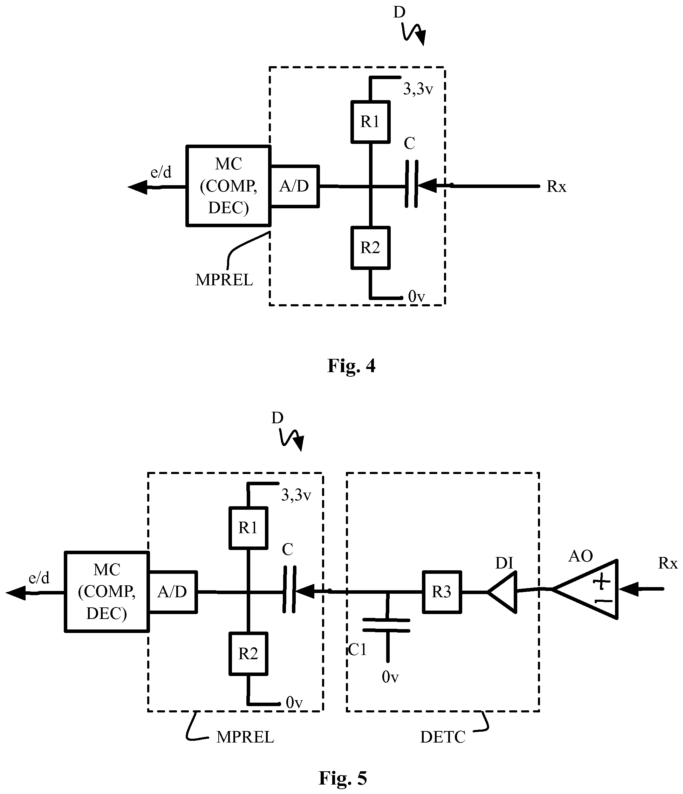

Selon un mode de réalisation du dispositif D, illustré à la Fig. 4, les moyens MPREL comportent un condensateur C qui élimine la composante continue du signal Rx, suivi d'un pont de résistances R1, R2 qui permet de re-centrer la partie alternative du signal Rx autour de sa valeur moyenne SMOY, suivi du convertisseur de tension alternative vers continue A/D qui permet de convertir le signal Rx filtré en un signal numérique composé d'échantillons. Il est alors aisé, à partir de cet ensemble d'échantillons, de prélever un échantillon de ce signal.

Selon un mode de réalisation du dispositif D, illustré à la Fig. 4, les moyens COMP et DEC sont mis en oeuvre par un micro-contrôleur MC dont l'entrée est associée à la sortie d'un convertisseur de tension alternative vers continue A/D et dont la sortie délivre un signal pilote e/d qui indique soit que le signal Rx est un signal modulé, soit que ce signal n'est pas un signal modulé ou qu'aucun signal Rx n'est présent sur le médium.

Selon un mode de réalisation, illustré à la Fig. 5, le dispositif D comporte également un détecteur de crête DETC monté en amont des moyens MPREL. La fonction de ce détecteur de crête DETC est de détecter l'enveloppe du signal Rx afin de maximiser le nombre d'échantillons qui s'écartent de la valeur moyenne SMOY de la valeur prédéterminée c'est-à-dire soit de la valeur $\delta_1$, soit de la valeur $\delta_2$ selon l'exemple de la Fig. 2, soit de la valeur $\delta$ lorsque les valeurs $\delta_1$ et $\delta_2$ sont égales à cette même valeur $\delta$. De préférence, le détecteur de crête DETC est un circuit formé d'une diode DI suivi en série d'un filtre passe bas (résistance R3 et condensateur C1) dont la fréquence de coupure se situe, dans le cas où le signal Rx est issu d'une structure OFDM, autour de la différence de deux fréquences porteuses OFDM (environ 25 KHz). L'entrée de la diode DI est maintenant l'entrée du dispositif D et la sortie du détecteur DETC est reliée à l'entrée du condensateur C des moyens MPREL.

Selon une variante de ce mode de réalisation, un amplificateur opérationnel AO monté en suiveur est positionné en amont du détecteur de crête DETC afin de minimiser l'impact de l'insertion du détecteur de crête DETC sur la transmission du signal Rx sur le médium en présentant, pour cela, au médium, une impédance suffisamment importante.

Le dispositif D peut éventuellement modifier le comportement d'un adaptateur courant porteur.

L'une de ces utilisations est de mettre en veille et de réveiller l'interface DC de cet adaptateur selon qu'un signal modulé SM est reçu ou pas via le réseau électrique.

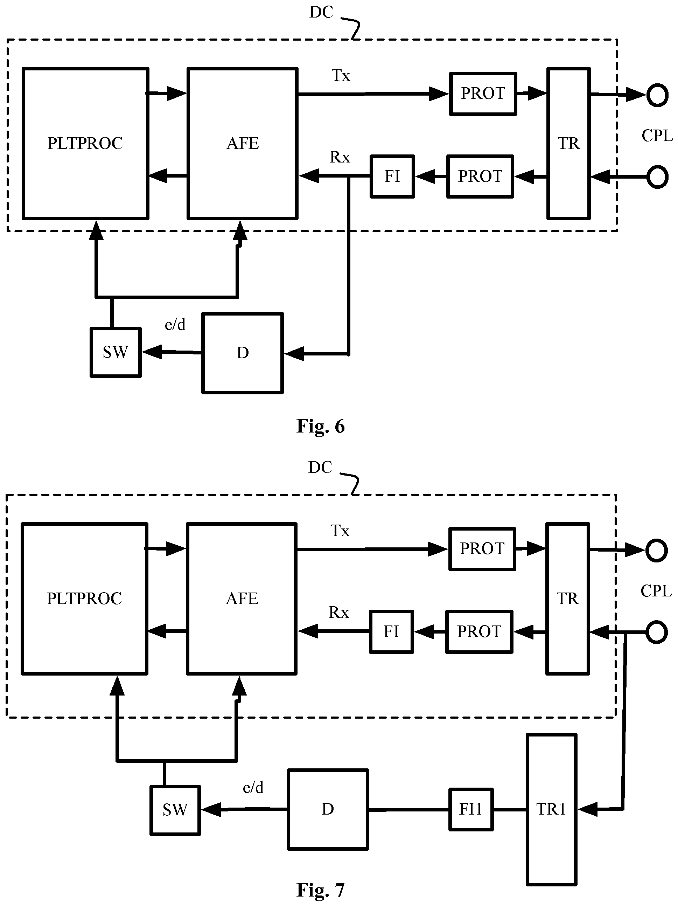

La Fig. 6 représente schématiquement les composants principaux d'un adaptateur courant porteur qui mettent en oeuvre les fonctionnalités des couches MAC et physiques de son interface courant porteur.

Classiquement, ces composants sont un processeur PLTPROC et une interface AFE qui gère les signaux entrants Rx et sortants Tx. De plus, un transformateur TR associé à des moyens PROT de protection contre les surtensions accidentelles qui se produisent sur le réseau électrique CPL sont situés entre le réseau électrique CPL et l'interface AFE. De plus, concernant la branche réception, les signaux entrants Rx sont filtrés par un filtre de réjection FI qui permet de réjecter les fréquences qui sont en dehors de la bande utile de fréquences porteuses. Par exemple, cette bande utile de fréquences porteuses s'étend de 1,8 à 30 MHz selon la norme Homeplug. Le signal Rx présent entre l'entrée de l'interface AFE et le filtre FI est un signal analogique qui regroupe donc uniquement des fréquences porteuses.

Selon la présente invention, l'adaptateur comporte l'un des dispositifs D décrits en relation avec les Fig. 4 et 5 pour détecter l'activité sur la couche physique de l'interface courant porteur de cet adaptateur et un moyen SW pour couper/rétablir l'alimentation de l'ensemble des composants de l'interface DC de cet adaptateur. Le moyen SW est piloté par le signal e/d émis par le dispositif D, c'est-à-dire que lorsque aucun signal modulé n'est détecté (aucun signal Rx n'est reçu ou un signal Rx reçu n'est pas un signal modulé), l'alimentation de l'ensemble des composants de l'interface DC (processeur PLTPROC et interface AFE notamment) est coupée, et dès que le dispositif D détecte qu'un signal Rx est un signal modulé, cette alimentation est rétablie.

Le moyen SW est par exemple un interrupteur branché sur l'alimentation de l'interface DC.

Selon un mode de réalisation, illustré à la Fig. 6, l'entrée du dispositif D est branchée entre la sortie du filtre FI et l'entrée de l'interface AFE qui gère les signaux entrants Rx et ce afin de profiter, d'une part, des moyens de protection PROT et, d'autre part, de la fonction de filtrage du filtre FI.

Selon un autre mode de réalisation illustré à la Fig. 7, l'entrée du dispositif D est branchée en amont du transformateur TR afin de limiter l'impact de l'introduction du dispositif D sur les performances de réception de l'adaptateur courant porteur (interférences). Dans ce cas, un autre transformateur TR1, similaire au transformateur TR, est branché sur la ligne électrique. Ce transformateur TR est suivi d'un filtre FI1, similaire au filtre FI, et l'entrée du dispositif D est branchée en sortie de ce filtre FI1.

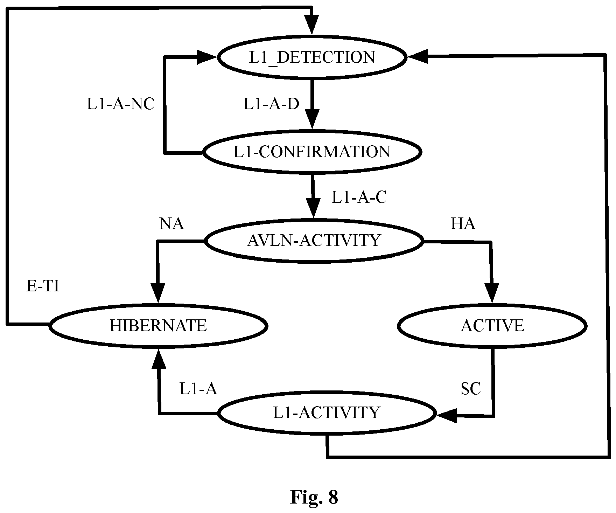

La Fig. 8 représente le diagramme d'un procédé de mise en veille et de réveil de l'interface courant porteur d'un adaptateur.

Le procédé de mise en veille et de réveil est caractérisé en ce que l'interface courant porteur est réveillée lorsque la présence d'un signal modulé reçu sur la couche physique de cette interface est détectée par le procédé de détection décrit en relation avec les Fig. 2 et 3, et cette interface est mise en veille si la présence d'un tel signal n'est pas détectée.

Lorsque ce procédé est mis en oeuvre par l'un des adaptateurs décrits en relation avec les Figs. 6 et 7, l'adaptateur fonctionne dans un premier mode basse consommation dit L1-DETECTION, au cours duquel le procédé de détection décrit en relation avec les Fig. 2 et 3 est exécuté par le micro-contrôleur MC, et, dès qu'un signal Rx est détecté comme étant un signal modulé, le signal pilote e/d est émis par ce micro-contrôleur pour rétablir l'alimentation électrique du processeur PLTPROC et de l'interface AFE.

Une fois cette alimentation rétablie (événement L1-A-D), l'adaptateur bascule vers un mode actif, dit L1-CONFIRMATION, au cours duquel le processeur PLTPROC interroge le micro-contrôleur MC sur la cause du réveil. Le micro-contrôleur MC répond au processeur PLTPROC qu'il a détecté un signal modulé. Le processeur PLTPROC entame alors un processus de confirmation et scanne le réseau électrique pendant une période de temps suffisante pour détecter un signal attendu qui est, selon un mode de réalisation, un signal de balise (beacon en angais). Par exemple, cette période est de 40ms dans la norme Homeplug AV pour un réseau électrique 50Hz, et 33ms pour un réseau électrique 60Hz.

Si pendant cette période, aucun signal attendu n'a été détecté, le processeur PLTPROC indique au micro-contrôleur MC que le signal modulé qu'il a détecté n'est pas confirmé (événement L1-A-NC). L'adaptateur bascule alors du mode L1-CONFIRMATION vers le mode L1-DETECTION.

Si pendant cette période, un signal attendu a été détecté, le processeur PLTPROC confirme au micro-contrôleur MC que le signal modulé est un signal attendu (événement L1-A-C). L'adaptateur bascule alors du mode L1-CONFIRMATION vers un autre mode actif, dit AVLN-ACTIVITY (Homeplug AV In-Home Logical Network selon la terminologie de la norme Homeplug). Au cours de ce mode, il est déterminé si le signal modulé confirmé est à destination de cet adaptateur, c'est-à-dire si le signal modulé confirmé est issu de l'activité sur le réseau électrique privé ou d'un réseau voisin. Cette distinction peut, par exemple, être réalisée par comparaison de clés d'encryptage différentes qui sont utilisées par chacun de ces réseaux.

Si le signal modulé confirmé n'est pas à destination de cet adaptateur, l'adaptateur bascule du mode AVLN-ACTIVITY vers un autre mode basse consommation dit HIBERNATE, au cours duquel l'interface courant porteur n'est plus alimentée électriquement et cette interface ne peut plus être alimentée pendant une durée DE dite de temporisation, même si un signal attendu se présente à l'entrée du processeur PLTPROC. Ceci permet d'assurer une période de temps en mode basse consommation sans être réveillé à tort par l'activité d'un réseau voisin. Ainsi, à chaque entrée dans ce mode, un minuteur est initialisé avec cette durée DE et lorsque ce minuteur claque (évènement E-T1), l'adaptateur bascule vers le mode L1-DETECTION.

Si le signal modulé confirmé est à destination de cet adaptateur, l'adaptateur bascule du mode AVLN-ACTIVITY vers un autre mode actif dit ACTIVE, au cours duquel l'interface courant porteur est alimentée électriquement afin de rejoindre le réseau courant porteur et ce afin d'échanger des données avec une autre interface courant porteur d'un équipement distant.

L'adaptateur bascule du mode ACTIVE vers un autre mode basse consommation L1_ACTIVITY lorsqu'une condition de mise en veille SC est réalisée.

Cette condition de mise en veille peut avoir des origines multiples telles que par exemple l'absence de trafic sur la couche MAC ou physique de l'interface courant porteur pendant une certaine durée. Cette condition SC peut également être issue de filtrage des données de couches protocolaires de niveau supérieur à celui de la couche MAC de l'interface courant porteur ou issue de l'une des couches de l'interface Ethernet de l'adaptateur.

Au cours du mode L1_ACTIVITY, le procédé de détection d'un signal modulé est exécuté uniquement pendant une durée prédéterminée. A l'issue de cette durée, l'adaptateur bascule vers le mode L1-DETECTION si la présence d'un signal modulé n'a pas été détectée et vers le mode HIBERNATE dans le cas contraire. Ce mode permet de déterminer s'il existe encore de l'activité sur la couche physique de l'interface courant porteur DC pendant une durée déterminée.

Un tel procédé présente des avantages tant en présence de réseaux voisins qu'en leur absence.

En leur absence, l'inactivité d'un réseau voisin sur la couche physique de l'interface courant porteur d'un adaptateur permet à cet adaptateur de fonctionner dans le mode L1-DETECTION, c'est-à-dire que cet adaptateur est à l'écoute de l'activité locale et consomme très peu du fait que l'ensemble des composants de l'interface courant porteur ne sont pas alimentés électriquement. L'inventeur a observé que les moyens mis en oeuvre pour le dispositif de détection consomment alors environ 50 mw. De plus, le fonctionnement de l'adaptateur dans le mode L1-DETECTION n'induit aucune pollution électromagnétique conduite et rayonnée au travers du câblage domestique. Enfin, le mode L1-DETECTION permet un redémarrage rapide de l'adaptateur, en pratique 1 à 3s entre la détection d'une activité et l'échange effectif de données.

La présence de réseaux voisins entraîne une activité parasite sur la couche physique de l'interface DC de l'adaptateur qui ne permet pas à l'adaptateur de fonctionner dans le mode L1-DETECTION. Néanmoins, la discrimination par le processeur PLTPROC de ce réveil parasite provoque le basculement de l'adaptateur vers le mode HIBERNATE et ainsi réduire sa consommation pendant la durée DE. Il y a donc, en présence de réseaux voisins une alternance entre des modes actifs L1-CONFIRMATION et AVLN-ACTIVITY et des modes basse consommation HIBERNATE et L1-DETECTION. La performance énergétique de l'adaptateur lorsqu'il est en veille dépend alors du rapport cyclique des modes actifs et basse consommation, soit principalement du rapport entre la durée DE et le temps de redémarrage de l'adaptateur.

**Revendications**

1. Procédé de détection de la présence d'un signal modulé sur un médium, le procédé étant tel qu'il prélève, pendant une période de temps prédéterminée (T), au moins un échantillon (Si) d'un signal présent sur ce médium et détermine qu'un signal modulé est présent sur le médium si le nombre d'échantillons (Si), dont les valeurs (V(Si)) s'écartent de la valeur moyenne de ce signal d'une valeur prédéterminée ($\delta_1,\delta_2,\delta$), est supérieur à un seuil prédéterminé (Th), et de déterminer qu'aucun signal modulé n'est présent sur le médium dans le cas contraire,

dans lequel la valeur d'un échantillon prélevé est considérée comme s'écartant de la valeur moyenne du signal lorsque cette valeur est soit supérieure à un premier seuil (th1), soit inférieure à un second seuil (th2), le premier seuil (th1) est défini en ajoutant une valeur prédéterminée ($\delta_1,\delta$) à la valeur moyenne du signal reçu tandis que le second seuil (th2) est défini en retranchant cette valeur prédéterminée ($\delta_2,\delta$) à la valeur moyenne.

2. Procédé selon la revendication 1, dans lequel des échantillons sont prélevés et la période de temps prédéterminée (T) débute dès que la valeur d'un échantillon prélevé (V(Si)) s'écarte de la valeur moyenne (SMOY) de ce signal de la valeur prédéterminée ($\delta_1,\delta_2,\delta$).

3. Procédé selon la revendication 2, dans lequel la moyenne (SMOY) est ré-ajustée tant qu'une première valeur d'échantillon prélevé (V(Sk)) ne s'écarte pas de la valeur moyenne (SMOY) de la valeur prédéterminée ($\delta_1,\delta_2,\delta$).

4. Dispositif de détection de la présence d'un signal modulé sur un médium, **caractérisé en ce qu'**il comporte des moyens (MPREL) pour prélever au moins un échantillon d'un signal présent sur ce médium, un moyen (COMP) pour déterminer si la valeur de chaque échantillon prélevé s'écarte de la valeur moyenne de ce signal d'une valeur prédéterminée ($\delta_1,\delta_2,\delta$), et des moyens (DEC) pour mettre en oeuvre l'un des procédés conformes à l'une des revendications 1 à 3.

5. Procédé de mise en veille et de réveil de l'interface courant porteur d'un adaptateur courant porteur, **caractérisé en ce que** l'interface courant porteur est réveillée électriquement lorsque la présence d'un signal modulé reçu sur la couche physique de cette interface est détectée par un procédé de détection conforme à l'une des revendications 1 à 3, et l'interface courant porteur est mise en veille si la présence d'un tel signal n'est pas détectée.

6. Procédé selon la revendication 5, ledit procédé étant destiné à être mis en oeuvre par un adaptateur comprenant une interface courant porteur dont les fonctionnalités sont mises en oeuvre par un processeur (PLTPROC), une interface (AFE) qui gère les signaux entrants (Rx) et sortants (Tx), et un micro-contrôleur (MC), l'adaptateur fonctionne dans un premier mode basse consommation dit L1-DETECTION, au cours duquel un procédé de détection conforme à l'une des revendications 1 à 3 est exécuté par le micro-contrôleur (MC) dans lequel le signal présent sur le médium est un signal entrant (Rx), et, dès qu'un signal entrant (Rx) est détecté comme étant un signal modulé, le micro-contrôleur (MC) émet un signal pilote (e/d) pour rétablir l'alimentation électrique du processeur (PLTPROC) et de l'interface (AFE).

7. Procédé selon la revendication 6, dans lequel une fois cette alimentation rétablie (L1-A-D), l'adaptateur bascule vers un mode actif, dit L1-CONFIRMATION, au cours duquel le processeur (PLTPROC) interroge le micro-contrôleur (MC) sur la cause du réveil, le micro-contrôleur (MC) répond au processeur (PLTPROC) qu'il a détecté un signal modulé, le processeur (PLTPROC) entame alors un processus de confirmation et scanne le réseau électrique pendant une période de temps suffisante pour détecter un signal attendu qui est, de préférence, un signal de balise.

8. Procédé selon la revendication 7, dans lequel si pendant cette période de temps, aucun signal attendu n'a été détecté, le processeur (PLTPROC) indique au micro-contrôleur (MC) que le signal modulé qu'il a détecté n'est pas confirmé (L1-A-NC), l'adaptateur bascule alors du mode L1-CONFIRMATION vers le mode L1-DETECTION, et si pendant cette période de temps, un signal attendu a été détecté, le processeur (PLTPROC) confirme au micro-contrôleur (MC) que le signal modulé est un signal attendu (L1-A-C), l'adaptateur bascule alors du mode L1-CONFIRMATION vers un autre mode actif, dit AVLN-ACTIVITY au cours duquel, il est déterminé si le signal modulé confirmé est à destination de cet adaptateur.

9. Procédé selon la revendication 8, dans lequel si le signal modulé confirmé n'est pas à destination de cet adaptateur, l'adaptateur bascule du mode AVLN-ACTIVITY vers un autre mode basse consommation dit HIBERNATE, au cours duquel l'interface courant porteur n'est plus alimentée électriquement et cette interface ne peut plus être alimentée pendant une durée (DE) dite de temporisation, même si un signal attendu se présente à l'entrée du processeur PLTPROC.

10. Procédé selon la revendication 9, dans lequel si le signal modulé confirmé est à destination de cet adaptateur, l'adaptateur bascule du mode AVLN-ACTIVITY vers un autre mode actif dit ACTIVE, au cours duquel l'interface courant porteur est alimentée électriquement afin de rejoindre le réseau courant porteur et ce afin d'échanger des données avec une autre interface courant porteur d'un équipement distant.

**11.** Procédé selon la revendication 10, dans lequel lorsqu'une condition de mise en veille (SC) est réalisée, l'adaptateur bascule du mode ACTIVE vers un autre mode basse consommation L1_ACTIVITY au cours duquel un procédé de détection conforme à l'une des revendications 1 à 3 est exécuté uniquement pendant une durée prédéterminée.

**12.** Procédé selon la revendication 11, dans lequel cette condition de mise en veille (SC) a pour origine l'absence de trafic sur la couche MAC ou physique de l'interface courant porteur pendant une certaine durée, ou être issue de filtrage des données de couches protocolaires de niveau supérieur à celui de la couche MAC de l'interface courant porteur ou issue de l'une des couches d'une autre interface de l'adaptateur.

**13.** Procédé selon la revendication 12, dans lequel à l'issue de cette durée prédéterminée, l'adaptateur bascule vers le mode L1-DETECTION si la présence d'un signal modulé n'a pas été détectée et vers le mode HIBERNATE dans le cas contraire.

**14.** Adaptateur courant porteur comprenant une interface courant porteur dont les fonctionnalités sont mises en oeuvre par un processeur (PLTPROC) et une interface (AFE) qui gère les signaux entrants (Rx) et sortants (Tx), les signaux entrants (Rx) étant filtrés par un filtre (FI) de réjection, **caractérisé en ce qu'**il comporte un dispositif (D) conforme à la revendication 4 et un moyen (SW) pour couper/rétablir l'alimentation de l'ensemble des composants de l'interface courant porteur, moyen qui est piloté par un signal pilote (e/d) issu du dispositif (D) pour mettre en oeuvre l'un des procédés conformes à l'une des revendications 1 à 3 ou 5 à 13.

**Patentansprüche**

**1.** Verfahren zum Detektieren des Vorhandenseins eines modulierten Signals in einem Medium, wobei das Verfahren derart ist, dass es während einer vorgegebenen Zeitdauer (T) wenigstens einen Abtastwert (Si) eines in diesem Medium vorhandenen Signals abgreift und bestimmt, dass ein moduliertes Signal in dem Medium vorhanden ist, falls die Anzahl von Abtastwerten (Si), deren Werte (V(Si)) von dem Mittelwert dieses Signals um einen vorgegebenen Wert ($\delta_1$, $\delta_2$, $\delta$) beabstandet sind, größer als ein vorgegebener Schwellenwert (Th) ist, und im entgegengesetzten Fall bestimmt, dass kein moduliertes Signal in dem Medium vorhanden ist, wobei der Wert eines abgegriffenen Abtastwerts als von dem Mittelwert des Signals beabstandet angesehen wird, wenn dieser Wert entweder größer als ein erster Schwellenwert (th1) oder kleiner als ein zweiter Schwellenwert (th2) ist, wobei der erste Schwellenwert (th1) durch Hinzufügen eines vorgegebenen Wertes ($\delta_1$, $\delta$) zu dem Mittelwert des empfangenen Signals definiert ist, während der zweite Schwellenwert (th2) durch Abziehen dieses vorgegebenen Wertes ($\delta_2$, $\delta$) von dem Mittelwert definiert ist.

**2.** Verfahren nach Anspruch 1, wobei Abtastwerte abgegriffen werden und die vorgegebene Zeitdauer (T) beginnt, sobald der Wert eines abgegriffenen Abtastwerts (V(Si)) von dem Mittelwert (SMOY) dieses Signals um den vorgegebenen Wert ($\delta_1$, $\delta_2$, $\delta$) beabstandet ist.

**3.** Verfahren nach Anspruch 2, wobei der Mittelwert (SMOY) neu eingestellt wird, solange der erste abgegriffene Abtastwert (V($S_k$)) von dem Mittelwert (SMOY) nicht um den vorgegebenen Wert ($\delta_1$, $\delta_2$, $\delta$) beabstandet ist.

**4.** Vorrichtung zum Detektieren des Vorhandenseins eines modulierten Signals in einem Medium, **dadurch gekennzeichnet, dass** sie Mittel (MPREL), um wenigstens einen Abtastwert eines in diesem Medium vorhandenen Signals abzugreifen, ein Mittel (COMP), um zu bestimmen, ob der Wert jedes abgegriffenen Abtastwerts von dem Mittelwert dieses Signals um einen vorgegebenen Wert ($\delta_1$, $\delta_2$, $\delta$) beabstandet ist, und Mittel (DEC), um eines der Verfahren nach einem der Ansprüche 1 bis 3 auszuführen, umfasst.

**5.** Verfahren, um die Trägerstromschnittstelle eines Trägerstromadapters in den Ruhezustand zu versetzen und um sie aufzuwecken, **dadurch gekennzeichnet, dass** die Trägerstromschnittstelle elektrisch aufgeweckt wird, wenn das Vorhandensein eines modulierten Signals, das auf der physikalischen Schicht dieser Schnittstelle empfangen wird, durch ein Detektionsverfahren nach einem der Ansprüche 1 bis 3 detektiert wird, und die Trägerdstromschnittstelle in den Ruhezustand versetzt wird, falls das Vorhandensein eines solchen Signals nicht detektiert wird.

**6.** Verfahren nach Anspruch 5, wobei das Verfahren dazu bestimmt ist, durch einen Adapter ausgeführt zu werden, der eine Stromträgerschnittstelle, deren Funktionalitäten durch einen Prozessor (PLTPROC) ausgeführt werden, eine Schnittstelle (AFE), die die Eingangssignale (Rx) und Ausgangssignale (Tx) steuert, und einen Mikrocontroller (MC) umfasst, wobei der Adapter in einer ersten Niedrigverbrauchsbetriebsart, die L1-DETECTION genannt wird, arbeitet, in der ein Detektionsverfahren nach einem der Ansprüche 1 bis 3 durch den Mikrocontroller (MC) ausgeführt wird, wobei das in dem Medium vorhandene Signal ein Eingangssignal (Rx) ist, und wobei der Mikrocontroller (MC), sobald ein Eingangssignal (Rx) als ein moduliertes Signal detektiert wird, ein Steuersignal (e/d) aussendet, um die elektrische Versorgung des Prozessors (PLTPROC) und der Schnittstelle (AFE) wiederherzustellen.

7. Verfahren nach Anspruch 6, wobei der Adapter, sobald diese Versorgung wiederhergestellt ist (L1-A-D) in eine aktive Betriebsart, die L1-CONFIRMATION genannt wird, schaltet, in der der Prozessor (PLTPROC) den Mikrocontroller (MC) zu der Ursache des Aufweckens befragt, wobei der Mikrocontroller (MC) dem Prozessor (PLTPROC) antwortet, dass er ein moduliertes Signal detektiert hat, wobei der Prozessor (PLTPROC) dann einen Bestätigungsprozess beginnt und das elektrische Netz während einer Zeitdauer abtastet, die ausreicht, um ein erwartetes Signal, das vorzugsweise ein Bakensignal ist, zu detektieren.

8. Verfahren nach Anspruch 7, wobei dann, wenn während dieser Zeitdauer Kein erwartetes Signal detektiert worden ist der Prozessor (PLTPROC) dem Mikrocontroller (MC) meldet, dass das modulierte Signal, das er detektiert hat, nicht bestätigt wird (L1-A-NC), der Adapter dann von der Betriebsart L1-CONFIRMATION in die Betriebsart L1-DETECTION schaltet, und wobei dann, wenn während dieser Zeitdauer ein erwartetes Signal detektiert worden ist, der Prozessor (PLTPROC) dem Mikrocontroller (MC) bestätigt, dass das modulierte Signal ein erwartetes Signal ist (L1-A-C), der Adapter dann von der Betriebsart L1-CONFIRMATION in eine andere aktive Betriebsart, die AVLN-ACTIVITY genannt wird, schaltet, in der bestimmt wird, ob das bestätigte modulierte Signal diesen Adapter zum Ziel hat.

9. Verfahren nach Anspruch 8, wobei dann, wenn das bestätigte modulierte Signal nicht diesen Adapter zum Ziel hat, der Adapter von der Betriebsart AVLN-ACTIVITY in eine andere Niedrigverbrauchsbetriebsart, die HIBERNATE genannt wird, schaltet, in der die Stromträgerschnittstelle nicht mehr elektrisch versorgt wird und diese Schnittstelle während einer sogenannten Verzögerungsdauer (DE) nicht mehr versorgt wird, selbst wenn ein erwartetes Signal am Eingang des Prozessors (PLTPROC) auftritt.

10. Verfahren nach Anspruch 9, wobei dann, wenn das bestätigte modulierte Signal diesen Adapter zum Ziel hat, der Adapter von der Betriebsart AVLN-ACTIVITY in eine andere aktive Betriebsart, die ACTIVE genannt wird, schaltet, in der die Stromträgerschnittstelle elektrisch versorgt wird, um das Stromträgernetz wieder anzuschließen, und dies, um Daten mit einer anderen Stromträgerschnittstelle eines entfernten Geräts auszutauschen.

11. Verfahren nach Anspruch 10, wobei dann, wenn eine Bedingung für die Versetzung in den Ruhezustand (SC) verwirklicht wird, der Adapter von der Betriebsart ACTIVE in eine andere Niedrigverbrauchsbetriebsart L1_ACTIVITY schaltet, in der ein Detektionsverfahren nach einem der Ansprüche 1 bis 3 ausschließlich während einer vorgegebenen Dauer ausgeführt wird.

12. Verfahren nach Anspruch 11, wobei diese Bedingung für die Versetzung in den Ruhezustand (SC) als Ausgangspunkt das Fehlen von Verkehr in der MAC-Schicht oder physikalischen Schicht der Stromträgerschnittstelle während einer bestimmten Dauer hat oder von der Filterung von Daten von Protokollschichten auf einer Ebene, die höher als jene der MAC-Schicht der Stromträgerschnittstelle ist, stammt oder von einer der Schichten einer anderen Schnittstelle des Adapters stammt.

13. Verfahren nach Anspruch 12, wobei am Ende dieser vorgegebenen Dauer der Adapter in die Betriebsart L1-DETECTION schaltet, falls das Vorhandensein eines modulierten Signals nicht detektiert worden ist, und im entgegengesetzten Fall in die Betriebsart HIBERNATE schaltet.

14. Stromträgeradapter, der eine Stromträgerschnittstelle, deren Funktionalitäten durch einen Prozessor (PLTPROC) ausgeführt werden, und eine Schnittstelle (AFE), die die Eingangssignale (Rx) und Ausgangssignale (Tx) steuert, umfasst, wobei die Eingangssignale (Rx) durch ein Zurückweisungsfilter (FI) gefiltert werden, **dadurch gekennzeichnet, dass** er eine Vorrichtung (D) nach Anspruch 4 und ein Mittel (SW) zum Unterbrechen/Wiederherstellen der Versorgung aller Komponenten der Stromträgerschnittstelle umfasst, wobei das Mittel durch ein Steuersignal (e/d) gesteuert wird, das von der Vorrichtung (D) für die Ausführung eines der Verfahren nach einem der Ansprüche 1 bis 3 oder 5 bis 13 stammt.

**Claims**

1. Method for detecting presence of a modulated signal on a medium, the method being such that it acquires, for a predetermined period of time (T), at least one sample (Si) of a signal present on this medium and determines that a modulated signal is present on the medium if the number of samples (Si), whose values (V(Si)) differ from the average value of this signal by a predetermined value ($\delta_1, \delta_2, \delta$), is greater than a predetermined threshold (Th), and for determining that no modulated signal is present on the medium in the opposite case,
in which the value of a sample acquired is considered as differing from the average value of the signal when this value is either greater than a first threshold (th1), or less than a second threshold (th2), the first threshold (th1) is defined by adding a predetermined value $(\delta_1, \delta)$ to the average value of the signal received, whereas the second threshold (th2) is defined by subtracting this predetermined value $(\delta_2, \delta)$ from the average value.

2. Method according to Claim 1, in which samples are acquired and the predetermined period of time (T) begins as soon as the value of an acquired sample (V(Si)) differs from the average value (SMOY) of this signal by the predetermined value $(\delta_1, \delta_2, \delta)$.

3. Method according to Claim 2, in which the average (SMOY) is re-adjusted for as long as the first value of acquired sample (V(Sk)) does not differ from the average value (SMOY) by the predetermined value $(\delta_1, \delta_2, \delta)$.

4. Device for detecting presence of a modulated signal on a medium, **characterized in that** it comprises means (MPREL) for acquiring at least one sample of a signal present on this medium, means (COMP) for determining whether the value of each acquired sample differs from the average value of this signal by a predetermined value $(\delta_1, \delta_2, \delta)$, and means (DEC) for implementing one of the methods according to one of Claims 1 to 3.

5. Method for putting into standby and for re-activating the power-line communication interface of a power-line communication adapter, **characterized in that** the power-line communication interface is electrically re-activated when presence of a modulated signal received on the physical layer of this interface is detected by a detection method according to one of Claims 1 to 3, and the power-line communication interface is put into standby if presence of such a signal is not detected.

6. Method according to Claim 5, said method being intended to be implemented by an adapter comprising a power-line communication interface whose functionalities are implemented by a processor (PLTPROC), an interface (AFE) which manages the incoming (Rx) and outgoing (Tx) signals, and a micro-controller (MC), the adapter operates in a first low-consumption mode called L1-DETECTION, during which a method of detection according to one of Claims 1 to 3 is executed by the micro-controller (MC) in which the signal present on the medium is an incoming signal (Rx), and, as soon as an incoming signal (Rx) is detected as being a modulated signal, the micro-controller (MC) generates a control signal (e/d) for restoring power supply to the processor (PLTPROC) and to the interface (AFE).

7. Method according to Claim 6, in which, once this power supply has been restored (L1-A-D), the adapter switches to an active mode, called L1-CONFIRMATION, during which the processor (PLTPROC) interrogates the micro-controller (MC) on the cause of the re-activation, the micro-controller (MC) responds to the processor (PLTPROC) that it has detected a modulated signal, the processor (PLTPROC) then begins a process of confirmation and scans the power supply network over a period of time sufficient to detect an expected signal which is, preferably, a marker signal.

8. Method according to Claim 7, in which, if during this period of time no expected signal has been detected, the processor (PLTPROC) indicates to the micro-controller (MC) that the modulated signal it has detected is not confirmed (L1-A-NC), the adapter then switches from the mode L1-CONFIRMATION to the mode L1-DETECTION, and if, during this period of time, an expected signal has been detected, the processor (PLTPROC) confirms to the micro-controller (MC) that the modulated signal is an expected signal (L1-A-C), the adapter then switches from the mode L1-CONFIRMATION to another active mode, called AVLN-ACTIVITY, during which it is determined whether the confirmed modulated signal is intended for this adapter.

9. Method according to Claim 8, in which, if the confirmed modulated signal is not intended for this adapter, the adapter switches from the mode AVLN-ACTIVITY to another low-consumption mode called HIBERNATE, during which the power-line communication interface is no longer powered and this interface can no longer be powered for a period of time (DE), called delay time, even if an expected signal appears at the input of the processor PLTPROC.

10. Method according to Claim 9, in which, if the confirmed modulated signal is intended for this adapter, the adapter switches from the mode AVLN-ACTIVITY to another active mode, called ACTIVE, during which the power-line communication interface is powered in order to connect to the power-line communication network for the purpose of exchanging data with another power-line communication interface of a remote equipment.

11. Method according to Claim 10, in which, when a standby condition (SC) is met, the adapter switches from the mode ACTIVE to another low-consumption mode, L1_ACTIVITY, during which a method of detection according to one of Claims 1 to 3 is executed only over a predetermined period of time.

12. Method according to Claim 11, in which this standby condition (SC) occurs as a result of the absence of traffic on MAC or physical layer of the power-lien communication interface during a certain period of time, or originates from the filtering of data from higher level protocol layers than that of the MAC layer of the power-line communication interface or from one of the layers of another interface of the adapter.

13. Method according to Claim 12, in which, at the end of the predetermined period, the adapter switches to the mode L1-DETECTION if the presence of a modulated signal has not been detected and to the mode HIBERNATE in the opposite case.

14. Power-line communication adapter comprising a power-line communication interface whose functionalities are implemented by a processor (PLTPROC) and an interface (AFE) which manages the incoming signals (Rx) and outgoing signals (Tx), the incoming signals (Rx) being filtered by a rejection filter (FI), **characterized in that** it comprises a device (D) according to Claim 4 and means (SW) for interrupting/restoring the power supply to all of the components of the power-line communication interface, which means is controlled by a control signal (e/d) generated by the device (D) for implementing one of the methods according to one of Claims 1 to 3 or 5 to 13.

ETH       DC

ETH_C  ETH_PHY  MAC  DC_PHY  DC_C

**Fig. 1**

S1      T
S        S5
$\delta_1$         th1
$\delta_2$         SMOY
          th2
S2      
S3 S4

**Fig. 2**

S1      T
S        S5
$\delta_1$        th1
$\delta_2$        SMOY
         th2
S2    
S3 S4

**Fig. 3**

**Fig. 4**

**Fig. 5**

DC

PLTPROC → AFE

Tx → PROT → TR → ○ CPL

Rx ← FI ← PROT ← ○

SW ← D ← e/d

**Fig. 6**

DC

PLTPROC → AFE

Tx → PROT → TR → ○ CPL

Rx ← FI ← PROT ← ○

SW ← D ← FI1 ← TR1

e/d

**Fig. 7**

**Fig. 8**

**EP 2 489 134 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9221193 A1
- US 6993667 B
- US 7278039 B

**Littérature non-brevet citée dans la description**

- *HomePlug AV White Paper, version HPAVWP-050818,* 2005